# EUROPÄISCHE PATENTANMELDUNG

(11) **EP 2 607 732 A1**
(43) Veröffentlichungstag der Anmeldung: **26.06.2013**
(21) Anmeldenummer: 11405375.4
(22) Anmeldetag: 23.12.2011
(51) Int. Cl.: F16C 33/66, F16C 29/06

(54) **Linearführung, Schmiermittelvorrichtung und Verwendung einer Schmiermittelvorrichtung in einer Linearführung**

(71) Anmelder: Schneeberger Holding AG, 4914 Roggwil (CH)
(72) Erfinder: Mischler, Ernst, 4914 Roggwil (CH)
(74) Vertreter: EGLI-EUROPEAN PATENT ATTORNEYS

(57) **Zusammenfassung**

Die Erfindung betrifft eine Linearführung mit einer Laufschiene und einem Laufwagen (14), welcher auf der Laufschiene verschiebbar gelagert ist. Der Laufwagen (14) enthält zumindest zwei Wälzkörperkanäle (16, 18), welche jeweils aus einem Lastkanal (16', 18'), einem parallel hierzu ausgerichteten Rückführkanal (16 " , 18 ") und zwei jeweils endseitig von den Kanälen angeordneten Umlenkkanälen zusammengesetzt sind, und eine Vielzahl von Wälzkörpern, welche in den Wälzkörperkanälen (16, 18) endlos umlaufend eingebracht sind. Die zumindest zwei Wälzkörperkanäle (16, 18) sind zueinander gegenüberliegend derart am Laufwagen (14) angeordnet, dass die jeweils im Lastkanal (16', 18') geführten Wälzkörper bei einem Führen des Laufwagens (14) entlang der Laufschiene in jeweils beidseitig in Längsrichtung entlang der Laufschiene eingebrachte Lastspuren wälzen. Die Linearführung umfasst ferner zumindest eine Schmiermittelvorrichtung (20), welche ein schmiermittelabsorbierendes Element enthält. Die Schmiermittelvorrichtung (20) ist entnehmbar derart am Laufwagen (14) anbringbar, dass diese ganz oder abschnittsweise direkt mit den jeweils in den Lastkanälen (16', 18') geführten Wälzkörpern in Kontakt steht.

## Beschreibung

Die Erfindung betrifft eine Linearführung gemäss dem Oberbegriff des Patentanspruchs 1. Die Erfindung betrifft ferner eine Schmiermittelvorrichtung nach Patentanspruch 15 und eine Verwendung einer Schmiermittelvorrichtung in einer Linearführung nach Patentanspruch 18.

Es sind Linearführungen bekannt, welche eine Laufschiene und einen Laufwagen umfassen, wobei der Laufwagen verschiebbar auf der Laufschiene gelagert ist. Hierbei enthält der Laufwagen zumindest zwei gegenüberliegende und in Längsrichtung der Laufschiene ausgerichtete Wälzkörperkanäle, welche jeweils aus einem Lastkanal, einem parallel hierzu ausgerichteten Rückführkanal und zwei jeweils endseitig von den Kanälen angeordneten Umlenkkanälen zusammengesetzt sind. In jedem Wälzkörperkanal sind eine Vielzahl von Wälzkörpern eingebracht, welche in den Wälzkörperkanälen endlos umlaufen. Hierbei sind die zumindest zwei Wälzkörperkanäle zueinander gegenüberliegend derart am Laufwagen angeordnet, dass die jeweils im Lastkanal geführten Wälzkörper bei einem Führen des Laufwagens entlang der Laufschiene in jeweils beidseitig in Längsrichtung entlang der Laufschiene eingebrachte Lastspuren wälzen.

Um den Verschleiss der Wälzkörper selber und den Verschleiss der Lastspuren der Laufschiene zu unterdrücken und zudem eine sehr genaue Bewegung des Laufwagens bei minimaler Reibung beizubehalten, muss den Wälzkörpern permanent ein Schmiermittel zugeführt werden, beispielsweise ein Schmierfett oder Schmieröl.

Hierzu wird in der US 5,615,955 vorgeschlagen, die Wälzkörper durch jeweils zwischengesetzte und selbstschmierende Abstandskugeln zu schmieren, welche ein Schmiermittel enthalten und dieses an die Wälzkörper abgeben. Es besteht ein Problem darin, dass das Schmiermittel in kurzer Zeit aufgebraucht ist. Ein Ersatz bzw. Nachfüllen ist nicht möglich oder sehr zeitintensiv, wodurch sich hohe Wartungskosten einstellen. Ein weiteres Problem besteht darin, dass die nicht zur Aufnahme von Kräften ausgebildeten, selbstschmierenden Abstandskugeln einen Raum verdrängen, welcher ansonsten zur Aufnahme weiterer Wälzkörper genutzt werden könnte, um die maximal mögliche Anzahl von Wälzkörpern bereitzustellen. Durch die im Vergleich zu üblichen Linearführungen somit reduzierte Anzahl von Wälzkörpern können nur reduzierte Lagerkräfte aufgenommen werden. Insgesamt sind Tragkraft und Lebensdauer der Linearführung reduziert.

Ein wartungsreduzierter Ansatz wird in der US 2006/0215943 verfolgt. In dieser Druckschrift ist eine Linearführungen gezeigt, bei welcher die Wälzkörper durch Rückführkanäle laufen, welche jeweils durch Röhrenelemente gebildet sind, in denen Schmiermittel aufgesaugt ist. Hierzu ist das Material der Röhrenelemente von einem zellularen oder porösen Aufbau. In diesen Rückführkanälen werden die Wälzkörper kontinuierlich durch Abgabe des Schmiermittels geschmiert. Es sind Schmiermittel-Reservoirs vorgesehen, welche diese Röhrenelemente wiederum mit Schmiermittel versorgen. Es besteht allerdings ein Problem darin, dass die Zufuhr von Schmiermittel an die Röhrenelemente ungleichförmig erfolgt. Es besteht ferner ein Problem in der Abnutzung der Röhrenelemente. Sobald diese abgenutzt sind, erfolgt keine Schmiermittelabgabe, wodurch die Leistung der zuverlässigen Schmierung in der Linearführung nicht mehr gesichert ist. Ein Austausch der abgenutzten Röhrenelemente ist nur unter erhöhtem Aufwand möglich. Ein weiteres Problem besteht darin, dass die Schmierung nur im Rückführkanal erfolgt. Nachteilhafterweise ist hierdurch jedoch das Schmiermittelvorkommen im gesamten Lastkanal reduziert. Dies ist insbesondere deshalb nachteilig, da insbesondere hier die Lagerkräfte auf die Wälzkörper wirken und demzufolge eine zuverlässige Schmierung besonders wichtig ist. Durch die unzureichende Schmierung im Lastkanal ist der Verschleiss im Lastkanal selber und an der Laufschiene hoch.

In der DE 198 28 587 wird vorgeschlagen, die Wälzkörper in jeweiligen Flanschelementen zu schmieren, welche jeweils einen Umlenkkanal zwischen Rückführkanal und Lastkanal des Laufwagens bereitstellen. Hierzu enthält jedes Flanschelement ferner ein Filzmaterial mit einem Vorsprung, welcher in den Laufbereich eines jeweiligen Umlenkkanals ragt. Das Filzmaterial ist mit Schmiermittel getränkt, welches über den Vorsprung kontinuierlich an die umlaufenden Wälzkörper abgegeben wird. Durch die näher an den Laufkanal gerückte Schmiermittelabgabe wird dieser zwar im Vergleich zu dem vorherigen Ansatz zuverlässiger geschmiert, allerdings ist das Schmiermittelvorkommen, bezogen auf die gesamte Länge des Lastkanals, noch immer unzureichend. Ein weiteres Problem besteht darin, dass, bedingt durch die endseitig angeordneten Flanschelemente, die Ausmasse in Längsrichtung des Laufwagens nachteilhaft erhöht werden.

Es ist Aufgabe der vorliegenden Erfindung, eine Linearführung bereitzustellen, bei welcher die zuvor genannten Probleme gelöst werden. Es ist insbesondere Aufgabe der vorliegenden Erfindung, eine Linearführung bereitzustellen, bei welcher eine zuverlässige Schmierung der Wälzkörper gewährleistet ist. Es ist zudem Aufgabe der vorliegenden Erfindung, eine Linearführung bereitzustellen, bei welcher Zeit und Kosten zur Wartung reduziert sind.

Diese Aufgabe wird erfindungsgemäss durch den kennzeichnenden Teil des Patentanspruchs 1 gelöst.

Demnach zeichnet sich die Linearführung insbesondere dadurch aus, dass zumindest eine Schmiermittelvorrichtung bereitgestellt ist, welche ein schmiermittelabsorbierendes Element enthält, wobei die Schmiermittelvorrichtung entnehmbar derart am Laufwagen anbringbar ist, dass diese ganz oder abschnittsweise direkt mit den jeweils in den Lastkanälen geführten Wälzkörpern in Kontakt steht.

Die erfindungsgemässe Linearführung hat den besonderen Vorteil einer zuverlässigen Schmierung der Wälzkörper im Lastkanal des Laufwagens. Hierdurch werden der Verschleiss und die Reibung des Laufwagens auf der Laufschiene reduziert. Dies gilt insbesondere im Hinblick auf Laufruhe, Gleichförmigkeit der Bewegung und reduzierte Reibung. Dieser Vorteil erwächst daraus, dass die Wälzkörper direkt im Lastkanal geschmiert werden. Nur in diesem Bereich des jeweiligen Wälzkörperkanals treten Lagerkräfte auf, welche bei unzureichender Schmierung zu Verschleiss und Abnutzung der Lauffläche des Lastkanals und der Lastspur der Laufschiene führen. Durch die überraschend einfache Lösung werden die Probleme aus dem Stand der Technik beseitigt. Die Wälzkörper können Kugeln oder Rollen aus Stahl, Keramik, usw. oder weitere rotierende Elemente sein.

Vorzugsweise ist die Schmiermittelvorrichtung U-förmig aus einer Basis und zwei von der Basis vorragenden Schenkeln ausgebildet, wobei die Endabschnitte der Schenkel im eingesetzten Zustand der Schmiermittelvorrichtung mit den in den Lastkanälen geführten Wälzkörpern in Kontakt stehen. Hierdurch wird das Schmiermittel durch Kapillarwirkung gleichförmig von der Schmiermittelvorrichtung an die Wälzkörper im Lastkanal überführt. Durch die besondere Ausbildung kann eine einstückige Schmiermittelvorrichtung zur gleichzeitigen Schmierung der Wälzköper in beiden Wälzkörperkanälen herangezogen werden. Somit werden Wartungsarbeiten zum Austausch oder Auffüllen der Schmiermittelvorrichtung reduziert. Durch die einstückige Ausbildung sind insgesamt die Kosten der Schmiermittelvorrichtung gering gehalten.

Vorzugsweise ist die Schmiermittelvorrichtung derart geformt, dass, im eingesetzten Zustand der Schmiermittelvorrichtung in den Laufwagen, die den Schenkeln entgegengesetzte Fläche der Basis durch eine Krafteinwirkung zumindest abschnittsweise gegen eine Fläche des Laufwagens gedrückt ist, durch welche Krafteinwirkung die Schmiermittelvorrichtung fest zwischen den Wälzkörpern und der Fläche des Laufwagens gehalten ist. Die Schmiermittelvorrichtung in dieser Ausführungsform der Linearführung kann von einem Längsende des Laufwagens aus schnell und einfach in den Zwischenraum eingeschoben werden, welcher sich zwischen Laufwagen und Laufschiene einstellt. Hierbei gleiten die Endabschnitte der beiden Schenkel der U-förmigen Schmiermittelvorrichtung auf den jeweiligen Wälzkörpern im Lastkanal. Gleichzeitig steht die Fläche der Basis, welche den Schenkeln entgegengesetzt ist, mit der Fläche des Laufwagens in Kontakt, welche zur Laufschiene hin ausgerichtet ist. Somit kann die U-förmige Schmiermittelvorrichtung in Längsrichtung des Laufwagens zwischen den Wälzkörpern und der oben beschriebenen Fläche des Laufwagens eingeschoben werden.

Vorzugsweise ist die Krafteinwirkung eine Klemmkraft, welche durch ein Stauchen der Schenkel der Schmiermittelvorrichtung hervorgerufen ist, welche Klemmkraft der Richtung der Stauchung entgegengesetzt gerichtet ist. Zum festen Einspannen der Schmiermittelvorrichtung in den Laufwagen dient somit eine Klemmkraft, welche hervorgerufen wird, indem die Schenkel der Schmiermittelvorrichtung beim Einsetzen in den Laufwagen gestaucht werden. Die hieraus resultierende Klemmkraft wirkt in entgegengesetzte Richtung und spannt die Schenkel und die Basis fest zwischen den Wälzkörpern und der oben beschriebenen Fläche ein. Zum Einsetzen der Schmiermittelvorrichtung in den Laufwagen muss lediglich die Klemmkraft überwunden werden, mit welcher die Schmiermittelvorrichtung zwischen den Wälzkörpern und der oben beschriebenen Fläche des Laufwagens eingespannt ist. Somit kann die Schmiermittelvorrichtung ohne zusätzliche Mittel zuverlässig gelagert werden.

Vorzugsweise weist die Basis der Schmiermittelvorrichtung eine nach oben gerichtete Wölbung auf, wobei die Krafteinwirkung eine Federkraft ist, welche einer auf die Wölbung der Basis angelegten Kraft zur Überführung der Basis in eine ebene Fläche entgegengesetzt gerichtet ist. Zum festen Einspannen der Schmiermittelvorrichtung in den Laufwagen wird die Schmiermittelvorrichtung durch Federkraft eingespannt, wobei die Schmiermittelvorrichtung hierzu federnd ausgeführt ist. Die Basis der Schmiermittelvorrichtung weist eine nach oben gerichtete gewölbte Form auf, welche nur durch Krafteinwirkung auf die Oberseite der Basis, in eine Richtung entgegengesetzt der Wölbung, in eine ebene Form überführt werden kann. Derart ausgeführt wird die Schmiermittelvorrichtung in den Laufwagen eingeschoben. Im eingeschobenen Zustand spannt die in entgegengesetzte Richtung wirkende Federkraft die Schenkel fest zwischen den Wälzkörpern und der Fläche ein. Somit kann die Schmiermittelvorrichtung auch in dieser Ausführungsform ohne zusätzliche Mittel zuverlässig gelagert werden.

Vorzugsweise ist die Krafteinwirkung durch ein Federelement hervorgerufen, welches zwischen der Basis der Schmiermittelvorrichtung und der Fläche des Laufwagens zwischengelegt ist und eine Federkraft zwischen der Basis und der Fläche des Laufwagens anlegt. Beim Einlegen der Schmiermittelvorrichtung in den Laufwagen wird das zwischengesetzte Federelement gestaucht und übt als Reaktion hierauf die Federkraft aus. Das Federelement kann beispielsweise eine Flachfeder sein. Somit kann die Schmiermittelvorrichtung zuverlässig gelagert werden.

Gleichzeitig ist die Schmiermittelvorrichtung in alle andere Richtungen fest gelagert. Die Schmiermittelvorrichtung wird gänzlich in den Aufnahmeraum des Laufwagens eingeschoben, so dass die Endabschnitte der Schenkel auf ganzer Länge mit den Wälzkörpern in Kontakt stehen. Hierbei muss die Schmiermittelvorrichtung nicht notwendigerweise derart bemessen sein, dass die Endabschnitte der Schenkel mit sämtlichen Wälzkörpern im Lastkanal in Kontakt stehen. Im somit beschriebenen eingesetzten Zustand der Schmiermittelvorrichtung in den Laufwagen ist die Schmiermittelvorrichtung durch die Krafteinwirkung (Klemmkraft und/oder Federkraft) derart fest eingespannt, dass die Schmiermittelvorrichtung auch im Betrieb keine Längsverschiebung in Längsrichtung des Laufwagens erfährt. Somit müssen vorteilhafterweise keine Befestigungen zur Befestigung der Schmiermittelvorrichtung am Laufwagen bereitgestellt werden. Ein weiterer Vorteil besteht darin, dass der Laufwagen für Wartungsarbeiten nicht zerlegt zu werden braucht. Insgesamt werden Zeit und Aufwand für Wartungsarbeiten reduziert.

Vorzugsweise enthält die Linearführung zwei Abdeckplättchen, welche jeweils an den Längsenden des Laufwagens anbringbar sind, wobei die Abdeckplättchen ausgelegt sind, eine Längsverschiebung der Schmiermittelvorrichtung über die Längsenden des Laufwagens hinaus zu unterbinden. Wie zuvor beschrieben, kann die Klemmkraft zum Einspannen der Schmiermittelvorrichtung in den Laufwagen derart gross sein, dass eine Längsverschiebung der Schmiermittelvorrichtung auch im Betrieb der Linearführung ausgeschlossen werden kann. Gemäss dieser Ausführungsform sind zwei Abdeckplättchen vorgesehen, welche, unabhängig von der Höhe der Klemmkraft, ein Herausfahren der Schmiermittelvorrichtung aus dem Laufwagen heraus zuverlässig verhindern. Sollte im Betrieb der Linearführung eine Längskraft auf die Schmiermittelvorrichtung einwirken, welche die Klemmkraft überwindet, so wird die Schmiermittelvorrichtung in Längsrichtung jeweils nur soweit verschoben, bis sie gegen eines der Abdeckplättchen anstösst. Ein Herausfahren der Schmiermittelvorrichtung aus dem Laufwagen heraus wird somit verhindert.

Vorzugsweise enthalten die Abdeckplättchen jeweils flexible Dichtungslippen, welche den Laufbereich auf der Laufschiene abdichtend umschliessen. Durch die abdichtende Wirkung der Abdeckplättchen wird ein Eindringen von Schmutz, Staub oder sonstigen Partikeln in den Bereich zwischen Laufwagen und Laufschiene verhindert. Somit wird insbesondere vorteilhaft verhindert, dass Partikel in den Wälzbereich zwischen Wälzkörper und Laufschiene eindringen und eine Zerstörung oder zumindest einen starken Verschleiss hervorrufen können.

In einer Ausführungsform ist vorzugsweise die zumindest eine Schmiermittelvorrichtung in einen von der Oberseite des Laufwagens zugänglichen Aufnahmebereich des Laufwagens einsetzbar. In dieser Variante wird die Schmiermittelvorrichtung von der Oberseite des Laufwagens aus in den eingelassenen Aufnahmebereich eingesteckt. Der Aufnahmebereich ist hierbei dergestalt ausgebildet, dass die Schenkel der Schmiermittelvorrichtung mit den Wälzkörpern des Lastkanals in Kontakt treten.

Vorzugsweise ist der Aufnahmebereich im eingesetzten Zustand der Schmiermittelvorrichtung von der Oberseite des Laufwagens durch eine Verschlussplatte abdichtbar. Somit können keine Fremdpartikel in den Aufnahmebereich eindringen.

Vorzugsweise ist die Schmiermittelvorrichtung durch die Verschlussplatte gegen die Wälzkörper gedrückt. Hierdurch hat die Verschlussplatte neben der Funktion, ein Eindringen von Fremdpartikeln zu verhindern, zugleich die Funktion, die Schmiermittelvorrichtung derart einzuspannen, dass die Schenkel zuverlässig gegen die Wälzkörper gedrückt werden. Hierdurch kann das in der Schmiermittelvorrichtung enthaltene Schmiermittel zuverlässig an die Wälzkörper im Lastkanal überführt werden. Sobald das Schmiermittel aufgebraucht ist, kann die Verschlussplatte abgehoben und die Schmiermittelvorrichtung aus dem Aufnahmebereich entnommen werden. Darauf folgend kann eine neue, mit Schmiermittel aufgefüllte Schmiermittelvorrichtung eingesetzt werden. Alternativ kann die entnommene Schmiermittelvorrichtung extern vom Laufwagen mit Schmiermittel aufgefüllt werden und anschliessend wieder in den Aufnahmebereich eingeführt werden. Weiter alternativ kann die entleerte Schmiermittelvorrichtung im Aufnahmebereich des Laufwagens belassen werden und von der Oberseite aus mit Schmiermittel aufgefüllt werden. Insgesamt wird die Wartungszeit reduziert.

In einer weiteren Ausführungsform enthält der Laufwagen vorzugsweise zumindest eine an einem Längsende des Laufwagens eingelassene Aussparung, in welche die Schmiermittelvorrichtung von dem Längsende aus einsteckbar und gehalten ist. In dieser Variante wird eine Schmiermittelvorrichtung, in Längsrichtung betrachtet, von einer Seite aus in die Aussparung des Laufwagens eingeschoben. Es können auch Aussparungen an beiden Längsenden des Laufwagens vorgesehen sein, in welche jeweils eine Schmiermittelvorrichtung eingeschoben wird. Auch hierbei treten die Schenkel der einen oder der mehreren Schmiermittelvorrichtungen mit den Wälzkörpern in Kontakt und schmieren diese zuverlässig.

In einer weiteren Ausführungsform ist vorzugsweise die zumindest eine Schmiermittelvorrichtung in einen von der Unterseite des Laufwagens zugänglichen Aufnahmebereich des Laufwagens einsetzbar. Hierbei wird die Schmiermittelvorrichtung von der Unterseite des von der Laufschiene entnommenen Laufwagens eingesetzt. Im eingesetzten Zustand stehen die Schenkel der Schmiermittelvorrichtung mit den Wälzkörpern im Lastkanal in Kontakt. Es kann hierbei vorgesehen sein, dass die Schmiermittelvorrichtung aus einem elastischen Material ausgebildet ist.

Vorzugsweise ist der Aufnahmebereich im eingesetzten Zustand der Schmiermittelvorrichtung von der Unterseite des Laufwagens durch eine Verschlussplatte abdichtbar. Hierdurch wird verhindert, dass Fremdpartikel in den Aufnahmebereich eindringen. Die Verschlussplatte dient zudem zum festen Einspannen der Schmiermittelvorrichtung in den Aufnahmebereich.

Die zuvor genannte Aufgabe wird zudem durch eine Schmiermittelvorrichtung zum Schmieren von Wälzkörpern einer Linearführung nach einem der Ansprüche 1 bis 14 gelöst.

Vorzugsweise ist die Schmiermittelvorrichtung einstückig aus einem schmiermittelabsorbierenden Material oder einer Kombination aus schmiermittelabsorbierenden Materialien ausgebildet. Das jeweilige schmiermittelabsorbierende Material kann beispielsweise ein Gewebe, einen Schaumstoff, ein poröses Material oder weitere Materialien mit absorbierenden Eigenschaften enthalten.

Vorzugsweise ist die Schmiermittelvorrichtung aus einem verschleissfesten Material oder einer Kombination aus verschleissfesten Materialien ausgebildet. Hierdurch ist ein langandauernder und zuverlässiger Kontakt mit den Wälzkörpern gewährleistet.

Die zuvor genannte Aufgabe wird zudem durch eine Verwendung einer Schmiermittelvorrichtung nach einem der Ansprüche 15 bis 17 in einer Linearführung nach einem der Ansprüche 1 bis 14 zum Schmieren von Wälzkörpern gelöst.

Im Folgenden wird die Erfindung anhand von Ausführungsbeispielen näher erläutert. Hierbei zeigen:
- Figur 1: eine perspektivische Darstellung einer Linearführung;
- Figuren 2a,b: Darstellungen eines Laufwagens einer Linearführung in einer ersten Ausführungsform;
- Figuren 3a,b: Darstellungen eines Laufwagens einer Linearführung in einer zweiten Ausführungsform;
- Figuren 4a-c: Darstellungen eines Laufwagens einer Linearführung in einer dritten Ausführungsform; und
- Figuren 5a,b: Darstellungen eines Laufwagens einer Linearführung in einer vierten Ausführungsform.

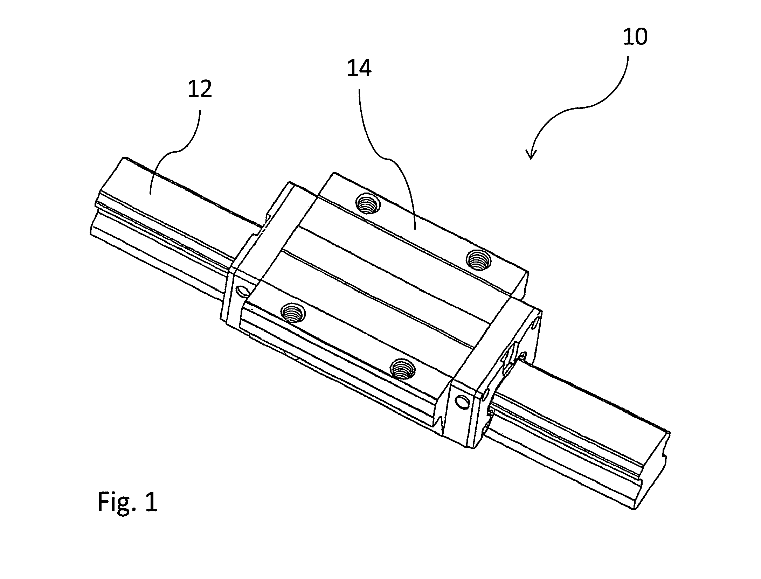

In Fig. 1 ist eine beispielhafte Linearführung 10 gezeigt, welche einen auf einer Laufschiene 12 beweglich angeordneten Laufwagen 14 enthält. Der Laufwagen 14 umfasst beispielsweise zwei gegenüberliegende umlaufende Wälzkörperkanäle (nicht gezeigt), in welchen Wälzkörper geführt sind, welche zwischen jeweils einem Wälzkörperkanal und einer Lastspur der Laufschiene 12 wälzen.

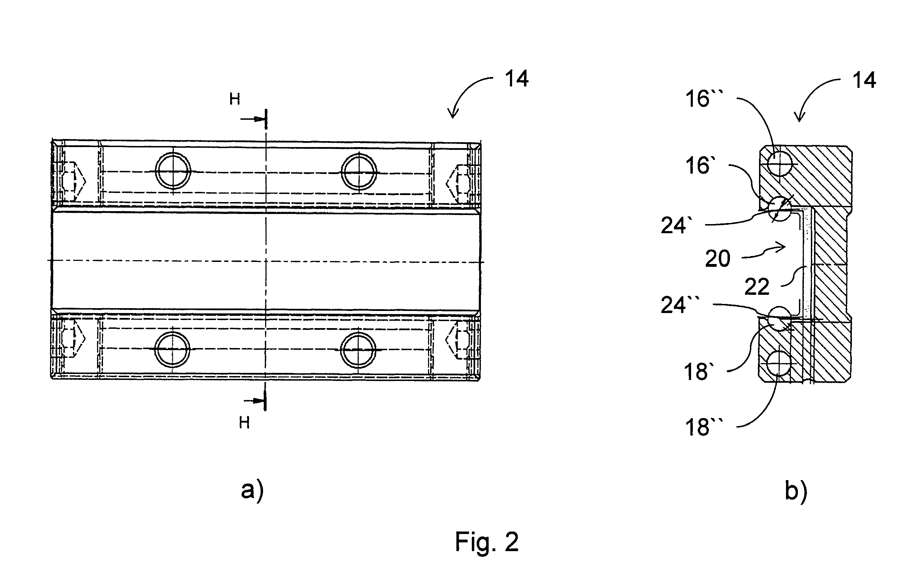

In Figuren 2a und 2b ist ein Laufwagen 14 einer Linearführung in einer ersten Ausführungsform gezeigt. Fig. 2a zeigt eine Draufsicht auf den Laufwagen 14, und Fig. 2b zeigt eine Schnittansicht entlang einer in Fig. 2a gezeigten Linie H-H. Der Laufwagen 14 enthält zwei Wälzkanäle 16, 18. Jeder Wälzkanal 16, 18 enthält jeweils einen Lastkanal 16', 18', einen Rückführkanal 16", 18'' und zwei Umlenkkanäle (nicht gezeigt), welche den Lastkanal 16', 18' und den Rückführkanal 16 ", 18'' an deren beiden Enden miteinander verbinden. Innerhalb der Wälzkanäle 16, 18 sind Wälzkörper (schematisch angezeigt) geführt, wobei die jeweils den Lastkanal 16', 18' durchlaufenden Wälzkörper, in Schnittrichtung betrachtet, an ihrem etwa halben Umfang im Lastkanal 16', 18' gelagert sind. Der jeweils entgegengesetzte Umfang ist spielfrei innerhalb einer Lastspur der Laufschiene (beide nicht gezeigt) gelagert. Somit ist eine spielfreie Verbindung zwischen Laufschiene und Laufwagen 14 gewährleistet, wobei der Laufwagen 14 über die Wälzkörper in Längsrichtung der Laufschiene gelagert bewegbar ist.

Wie bei nahezu allen Wälzlagern üblich, ist auch bei dieser Linearführung eine ausreichende Schmierung notwendig. Hierzu ist eine Schmiermittelvorrichtung 20 vorgesehen, welche in einem Aufnahmebereich zwischen Laufwagen 14 und Laufschiene eingebracht ist und am Laufwagen 14 selber gehalten ist. Die Schmiermittelvorrichtung 20 ist U-förmig aus einer Basis 22 und zwei von der Basis 22 vorragenden Schenkeln 24`, 24 " ausgebildet. Der Aufnahmebereich und die Schmiermittelvorrichtung 20 sind hierbei derart ausgeführt, dass die Aussenflächen der Schenkel 24', 24" gegen Seitenwände des Aufnahmebereichs fest anliegen. Ferner liegt die Oberfläche der Basis 22 an der Deckenfläche des Aufnahmebereichs an. Schliesslich stehen Endabschnitte der Schenkel 24`, 24 " mit den im Lastkanal 16', 18` geführten Wälzkörpern in Kontakt. Durch diese Anordnung ist die Schmiermittelvorrichtung 20 in alle Richtungen, mit Ausnahme der Richtung parallel zur Laufschiene, fest gelagert.

Die Schmiermittelvorrichtung 20 wird von einem der Längsenden des Laufwagens 14 aus mit einer Kraft in den Aufnahmebereich hineingeschoben, welche eine Klemmkraft und/oder Federkraft überwindet. Die Klemmkraft gewährleistet den zuverlässigen Kontakt zwischen den Wälzkörpern und der Schmiermittelvorrichtung und verhindert, dass die Schmiermittelvorrichtung 20 auch im Betrieb der Linearführung (Führen des Laufwagens auf der Laufschiene) herausgeschoben wird. Somit kann vorteilhafterweise auf eine Befestigung der Schmiermittelvorrichtung 20 verzichtet werden.

Alternativ kann eine Befestigung vorgesehen werden. Hierzu können beispielsweise zwei Abdeckplättchen (nicht gezeigt) bereitgestellt werden, welche an den Längsenden des Laufwagens 14 aufgesteckt werden. Diese Abdeckplättchen sind dabei derart geformt, dass die eingesetzte Schmiermittelvorrichtung 20 in Längsrichtung gegen Innenbereiche anstossen kann, wodurch eine weitere Bewegung aus dem Aufnahmebereich heraus effektiv verhindert wird. Zur Entnahme der Schmiermittelvorrichtung 20 kann eines der Abdeckplättchen entfernt werden, wodurch der Aufnahmebereich zugänglich wird. Anschliessend kann die Schmiermittelvorrichtung 20 einfach gegen Überwindung der Klemmkraft und/oder Federkraft aus dem Aufnahmebereich heraus geschoben werden.

Ein ganz wesentlicher Vorteil der Erfindung besteht darin, dass die Schmierung der Wälzkörper im Lastkanal 16', 18' selber stattfindet. Somit wird eine Schmierung in jenen Bereichen der Linearführung bereitgestellt, wo diese aufgrund hoher Lasten und Lagerkräfte besonders zuverlässig sein muss. Aufgrund der effektiven Schmiermittelabgabe werden der Verschleiss reduziert, die Verschiebekräfte durch Verringerung der Reibung wesentlich verbessert und insgesamt der Schmiermittelverbrauch reduziert. Im Umkehrschluss können die Wartungsintervalle verlängert werden, wodurch wiederum Kosten eingespart werden.

Ein weiterer Vorteil besteht darin, dass die Wartungsarbeiten zum Entnehmen und Einführen der Schmiermittelvorrichtung 20 am Laufwagen direkt durchgeführt werden können, ohne dass dieser von der Laufschiene entnommen zu werden braucht. Insgesamt sind die Wartungsarbeiten schnell und einfach durchführbar.

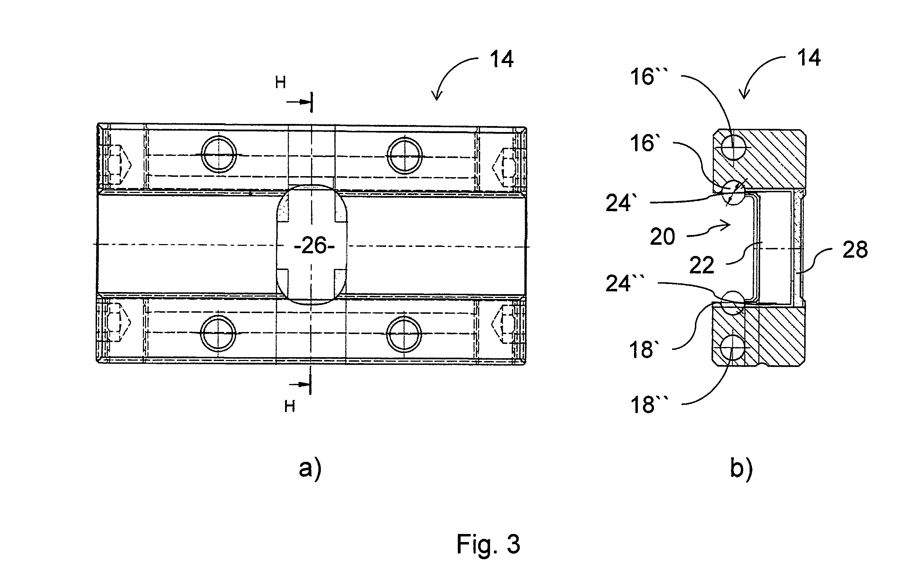

Figuren 3a und 3b zeigen den Laufwagen 14 einer Linearführung in einer zweiten Ausführungsform. Fig. 3a zeigt eine Draufsicht auf die Oberseite des Laufwagens 14. Der Laufwagen ist mit einem Aufnahmebereich 26 bereitgestellt, welcher auf der Oberseite des Laufwagens 14 eingelassen ist. Der Aufnahmebereich 26 ist zur Aufnahme der Schmiermittelvorrichtung 20 von der Oberseite des Laufwagens 14 aus ausgebildet. Ferner ist zwischen dem Aufnahmebereich 26 und den im Lastkanal 16', 18' umlaufenden Wälzkörpern ein Zugang bereitgestellt. Somit können die Endabschnitte der Schenkel 24', 24 " der in den Aufnahmebereich 26 eingesetzten Schmiermittelvorrichtung 20 mit Oberflächenabschnitten der Wälzkörper in Kontakt treten.

Der Aufnahmebereich 26 kann nach dem Einsetzen der Schmiermittelvorrichtung 20 durch eine Verschlussplatte 28 abgedeckt und verschlossen werden. Die Verschlussplatte 28 kann dabei die Schmiermittelvorrichtung 20 in Richtung der Wälzkörper drücken, so dass ein dauerhafter Kontakt zwischen den Endabschnitten der Schenkel 24', 24 " und den Wälzkörpern gewährleistet ist. Auch in dieser Ausführungsform ist ein Austausch der Schmiermittelvorrichtung 20 ohne Entnahme des Laufwagens 14 von der Laufschiene möglich.

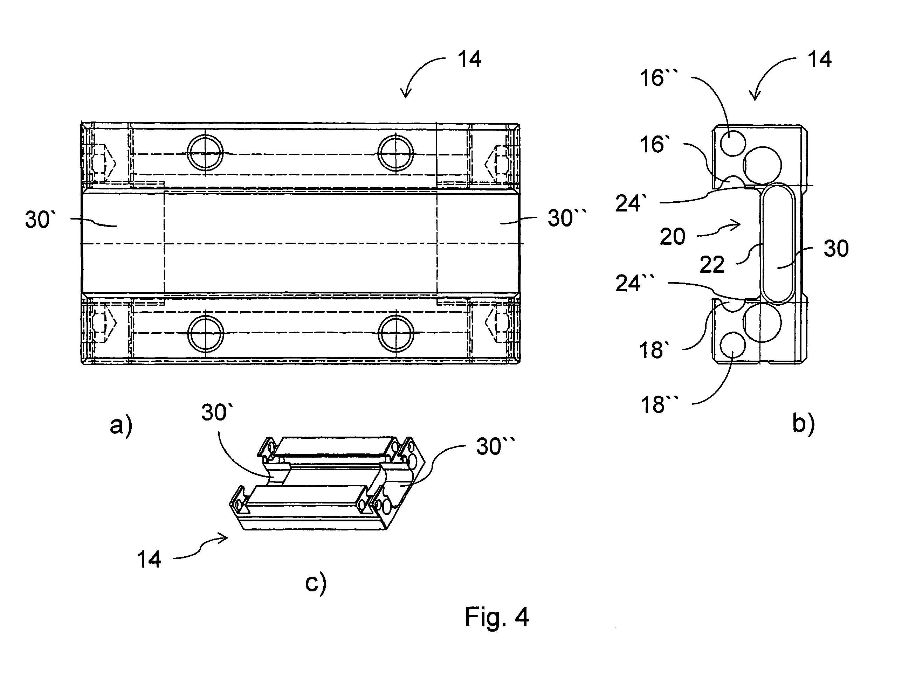

Figuren 4a bis 4c zeigen den Laufwagen 14 einer Linearführung in einer dritten Ausführungsform. Hierbei zeigt Fig. 4a eine Draufsicht auf die Oberseite des Laufwagens 14. Durch gestrichelte Linien sind jeweils zwei Aussparungen 30', 30 " angezeigt, welche jeweils an den beiden Längsenden des Laufwagens 14 eingelassen sind. Diese Aussparungen 30', 30 " sind komplementär der Aussenform der Schmiermittelvorrichtung (nicht gezeigt) angepasst. Wie insbesondere anhand von Fig. 4c gut zu erkennen, sind die Aussparungen 30', 30" in Richtung zur Unterseite des Laufwagens 14 geöffnet. Hierdurch ist es möglich, dass Schmiermittelvorrichtungen mit einem maximalen Volumen eingesetzt werden können. Ferner sind die Aussparungen 30', 30 " dergestalt ausgeformt, dass die Endabschnitte der Schenkel der Schmiermittelvorrichtungen einen Zugang zu den Wälzkörpern haben.

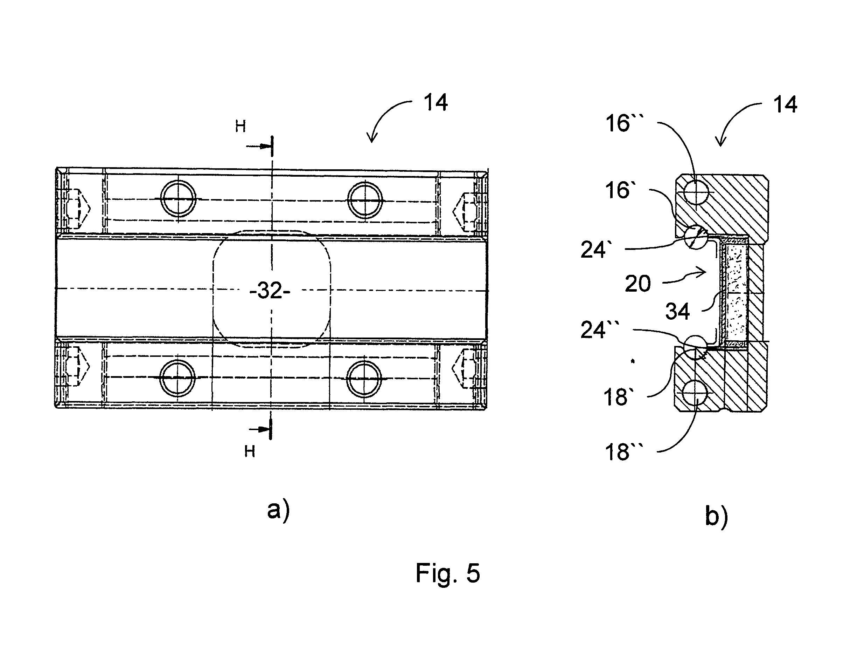

Figuren 5a und 5b zeigen den Laufwagen 14 einer Linearführung in einer vierten Ausführungsform. Hierbei zeigt Fig. 5a eine Draufsicht auf die Oberseite des Laufwagens 14. Wie durch eine gestrichelte Linie angezeigt, ist an der Unterseite des Laufwagens 14 ein Aufnahmebereich 32 bereitgestellt. Dieser Aufnahmebereich 32 hat eine Form, welche komplementär zur Aussenform der Schmiermittelvorrichtung ist. Wie in Fig. 5b gezeigt, welche eine Schnittansicht entlang einer Linie H-H von Fig. 5a darstellt, kann die Schmiermittelvorrichtung 20 in Richtung von der Unterseite des Laufwagens 14 in den Aufnahmebereich 32 hinein eingesetzt werden. Im eingesetzten Zustand der Schmiermittelvorrichtung 20 in den Aufnahmebereich 32 treten die Schenkel 24', 24" der Schmiermittelvorrichtung 20 mit den im Lastkanal 16', 18' umlaufenden Wälzkörpern in Kontakt. Zugleich ist die Schmiermittelvorrichtung 20 fest im Aufnahmebereich 32 gehalten. Um die Schmiermittelvorrichtung 20 schnell und einfach in den Aufnahmebereich 32 einlegen zu können, kann die Schmiermittelvorrichtung 20 aus einem nachgiebigen, elastischen Material ausgebildet sein, beispielsweise ein Schaumstoff oder Gewebe. Damit ein Eindringen von Fremdstoffen in das Material der Schmiermittelvorrichtung 20 verhindert wird, kann ein Verschluss 34 vorgesehen sein, welcher die Schmiermittelvorrichtung 20 gegen die Unterseite abdichtet.

## Patentansprüche

1. Linearführung (10) mit einer Laufschiene (12) und einem Laufwagen (14), welcher auf der Laufschiene (12) verschiebbar gelagert ist, wobei der Laufwagen (14) zumindest zwei Wälzkörperkanäle (16, 18), welche jeweils aus einem Lastkanal (16', 18'), einem parallel hierzu ausgerichteten Rückführkanal (16 ", 18 ") und zwei jeweils endseitig von den Kanälen angeordneten Umlenkkanälen zusammengesetzt sind, und eine Vielzahl von Wälzkörpern enthält, welche in den Wälzkörperkanälen (16, 18) endlos umlaufend eingebracht sind, wobei die zumindest zwei Wälzkörperkanäle (16, 18) zueinander gegenüberliegend derart am Laufwagen (14) angeordnet sind, dass die jeweils im Lastkanal (16', 18') geführten Wälzkörper bei einem Führen des Laufwagens (14) entlang der Laufschiene (12) in jeweils beidseitig in Längsrichtung entlang der Laufschiene (12) eingebrachte Lastspuren wälzen,
**gekennzeichnet durch**
zumindest eine Schmiermittelvorrichtung (20), welche ein schmiermittelabsorbierendes Element enthält, wobei die Schmiermittelvorrichtung (20) entnehmbar derart am Laufwagen (14) anbringbar ist, dass diese ganz oder abschnittsweise direkt mit den jeweils in den Lastkanälen (16', 18`) geführten Wälzkörpern in Kontakt steht.

2. Linearführung (10) nach Anspruch 1, bei welcher die Schmiermittelvorrichtung (20) U-förmig aus einer Basis (22) und zwei von der Basis vorragenden Schenkeln (24', 24 ") ausgebildet ist, wobei die Endabschnitte der Schenkel (24', 24 ") im eingesetzten Zustand der Schmiermittelvorrichtung (20) mit den in den Lastkanälen (16', 18') geführten Wälzkörpern in Kontakt stehen.

3. Linearführung (10) nach Anspruch 2, bei welcher die Schmiermittelvorrichtung (20) derart geformt ist, dass, im eingesetzten Zustand der Schmiermittelvorrichtung (20) in den Laufwagen (14), die den Schenkeln (24`, 24 ") entgegengesetzte Fläche der Basis (22) durch eine Krafteinwirkung zumindest abschnittsweise gegen eine Fläche des Laufwagens (14) gedrückt ist, durch welche Krafteinwirkung die Schmiermittelvorrichtung (20) fest zwischen den Wälzkörpern und der Fläche des Laufwagens (14) gehalten ist.

4. Linearführung (10) nach Anspruch 3, wobei die Krafteinwirkung eine Klemmkraft ist, welche durch ein Stauchen der Schenkel (24', 24 ") der Schmiermittelvorrichtung (20) hervorgerufen ist, welche Klemmkraft der Richtung der Stauchung entgegengesetzt gerichtet ist.

5. Linearführung (10) nach Anspruch 3 oder 4, wobei die Basis der Schmiermittelvorrichtung (20) eine nach oben gerichtete Wölbung aufweist, wobei die Krafteinwirkung eine Federkraft ist, welche einer auf die Wölbung der Basis (22) angelegten Kraft zur Überführung der Basis (22) in eine ebene Fläche entgegengesetzt gerichtet ist.

6. Linearführung (10) nach Anspruch 3, wobei die Krafteinwirkung durch ein Federelement hervorgerufen ist, welches zwischen der Basis (22) der Schmiermittelvorrichtung (20) und der Fläche des Laufwagens (14) zwischengelegt ist und eine Federkraft zwischen der Basis (22) und der Fläche des Laufwagens (14) anlegt.

7. Linearführung (10) nach einem der Ansprüche 3 bis 6, ferner umfassend zwei Abdeckplättchen, welche jeweils an den Längsenden des Laufwagens (14) anbringbar sind, wobei die Abdeckplättchen ausgelegt sind, eine Längsverschiebung der Schmiermittelvorrichtung (20) über die Längsenden des Laufwagens (14) hinaus zu unterbinden.

8. Linearführung (10) nach Anspruch 7, bei welcher die Abdeckplättchen jeweils flexible Dichtungslippen enthalten, welche den Laufbereich auf der Laufschiene (12) abdichtend umschliessen.

9. Linearführung (10) nach Anspruch 1 oder 2, bei welcher die zumindest eine Schmiermittelvorrichtung (20) in einen von der Oberseite des Laufwagens (14) zugänglichen Aufnahmebereich (26) des Laufwagens (14) einsetzbar ist.

10. Linearführung (10) nach Anspruch 9, bei welcher der Aufnahmebereich (26) im eingesetzten Zustand der Schmiermittelvorrichtung (20) von der Oberseite des Laufwagens (14) durch eine Verschlussplatte (28) abdichtbar ist.

11. Linearführung (10) nach Anspruch 10, bei welcher die Schmiermittelvorrichtung (20) durch die Verschlussplatte (28) gegen die Wälzkörper gedrückt ist.

12. Linearführung (10) nach Anspruch 1 oder 2, bei welcher der Laufwagen (14) zumindest eine an einem Längsende des Laufwagens (14) eingelassene Aussparung (30`, 30 ") enthält, in welche die Schmiermittelvorrichtung (20) von dem Längsende aus einsteckbar und gehalten ist.

13. Linearführung (10) nach Anspruch 1 oder 2, bei welcher die zumindest eine Schmiermittelvorrichtung (20) in einen von der Unterseite des Laufwagens (14) zugänglichen Aufnahmebereich (32) des Laufwagens (14) einsetzbar ist.

14. Linearführung (10) nach Anspruch 13, bei welcher der Aufnahmebereich (32) im eingesetzten Zustand der Schmiermittelvorrichtung (20) von der Unterseite des Laufwagens (14) durch eine Verschlussplatte (34) abdichtbar ist.

15. Schmiermittelvorrichtung (20) zum Schmieren von Wälzkörpern einer Linearführung (10) nach einem der Ansprüche 1 bis 14.

16. Schmiermittelvorrichtung (20) nach Anspruch 15, welche einstückig aus einem schmiermittelabsorbierenden Material oder einer Kombination aus schmiermittelabsorbierenden Materialien ausgebildet ist.

17. Schmiermittelvorrichtung (20) nach Anspruch 15 oder 16, welche aus einem verschleissfesten Material oder einer Kombination aus verschleissfesten Materialien ausgebildet ist.

18. Verwendung einer Schmiermittelvorrichtung (20) nach einem der Ansprüche 15 bis 17 in einer Linearführung (10) nach einem der Ansprüche 1 bis 14 zum Schmieren von Wälzkörpern.
